Europäisches Patentamt

European Patent Office

Office européen des brevets

(11) Publication number : **0 510 970 A2**

# (12) EUROPEAN PATENT APPLICATION

(21) Application number : **92303656.0**

(22) Date of filing : **23.04.92**

(51) Int. Cl.⁵ : **G11B 5/17**

(30) Priority : **26.04.91 JP 123125/91**

(43) Date of publication of application :
**28.10.92 Bulletin 92/44**

(84) Designated Contracting States :
**DE FR GB IT**

(71) Applicant : **International Business Machines
Corporation
Old Orchard Road
Armonk, N.Y. 10504 (US)**

(72) Inventor : **Arai, Yuichi
4256 Izumicho, Izumiko
Yokohama-shi, Kanagawa-ken (JP)**

Inventor : **Kobayashi, Sakae
1792-1-2-232 Shimotsuchitana
Fujisawa-shi, Kanagawa-ken (JP)**
Inventor : **Noda, Kohki
2-18-8 Kameino
Fujisawa-shi, Kanagawa-ken (JP)**
Inventor : **Takeda, Kazuya
1-10-6 Matsugaoka, Kugenuma
Fujisawa-shi, Kanagawa-ken (JP)**
Inventor : **Umezaki, Hiroshi
Kugenuma-kaigann 7-20-9
Fujisawa Kanagawa,251 (JP)**

(74) Representative : **Burt, Roger James, Dr. et al
IBM United Kingdom Limited Intellectual
Property Department Hursley Park
Winchester Hampshire SO21 2JN (GB)**

(54) **Magnetic head and manufacturing method thereof.**

(57) In magnetic head including a magnetic core and a slider, a first chip having layered wires and bonding bumps is disposed inside of a winding window, and a second chip having layered wires, bonding bumps, and a groove straddling the magnetic core is disposed outside of the winding window, wherein the bonding bumps of both chips are bonded to each other so that a laminated wiring coil is formed.

FIG.1

EP 0 510 970 A2

The present invention relates to magnetic heads and methods of manufacture thereof.

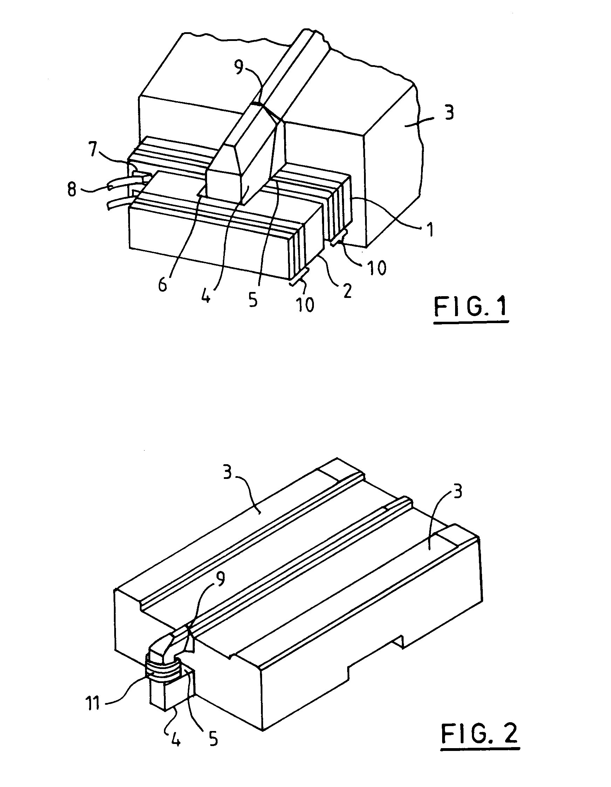

A conventional ferrite head (Fig.2) for a hard disk is composed of a ferrite slider 3 and a ferrite core 4 bonded to each other and unified through a gap member 9 and a coil 11 formed by a wire wound through a winding window 5, through which a signal current flows for recording and reproducing. As the wire, a copper conductor the diameter of which is 30um or more to provide mechanical strength, is usually used.

Being a combination of inexpensive ferrite, glass, and so forth, and produced mainly by mechanical processing, such a ferrite head can be made at a significantly low cost in comparison with a thin film head. The performance in reading/writing of the ferrite head, especially in an area of low recording density, is equivalent to or better than that of the thin film head. This is the reason why the ferrite head is frequently used as a head for a small-sized hard disk. What is called a MIG (Metal In Gap) head, in which magnetic metal is inserted in a gap section of a ferrite head has been proposed recently. The appearance of the MIG head being the same as that of the ferrite head, the MIG head is herein assumed to be a kind of ferrite head.

JP-A-62-16445 (PEPA) discloses a magnetic head in which a conductive layer and an insulating layer are alternately stacked around a block which can be a magnetic core and a magnetic path layer, both ends of which contact the block, is formed on the stacked layers.

JP-A-64-5366 (PEPA) discloses a thin film magnetic head in which a first magnetic layer, an insulating layer, a coil layer, and a part of a second magnetic layer are formed on a substrate and the remaining part of the second magnetic layer is formed on a protective plate and both layers are unified.

A conventional magnetic head involves a problem to be solved for magnetic recording at a high density. That is, as in the conventional ferrite head, magnetic circuits are formed from ferrite bulk materials, the value of inductance is approximately five times that of a thin film head and the high-frequency characteristic of a coil is inferior to the thin film head. This causes a problem in increasing recording density.

An object of the present invention is to solve such problem and to implement high-density recording with a ferrite head. A high inductance in the ferrite head is caused by the magnetic path and cross-sectional area of a magnetic circuit through ferrite greater than those of a magnetic circuit (thin film permalloy) in tie thin film head. The shape of a ferrite core and the size of a winding window depend on space for winding copper wires and its mechanical strength. Thus, it is very difficult to obtain the predetermined number of turns of wire to be wound and at the same time reduce the size of the core.

The conventional ferrite head involves another problem for coil winding, because operations for winding copper wires for each head through the winding window are needed. The operations require long time, whether they are automatic or manual and thus prevent cost saving.

The conventional ferrite head involves still another problem due to the size and load of the coil. As recording density increases, a slider has a tendency to be decreased in size. However, as the coil needs a predetermined diameter of wire and number of turns of wire, it is very difficult to reduce the size of the coil. For this reason, the slider and the coil become unbalanced, thus floating becomes unstable and a shock, if any, causes the ferrite core to be damaged.

Accordingly, to solve the above problems, a coil for a ferrite head is made by using thin film micro-fabrication technology. The thin film micro-fabrication technology includes a thin film mounting technique such as evaporation, sputtering, plating, etc., photolithography, and bonding.

According to the invention, there is provided a magnetic head including a magnetic core and a slider, comprising a substrate having wires embedded therein and connected to surface bonding contact pads connected to each other to form a coil through a winding window between the core and slider.

From another aspect of the invention, a method of manufacturing a magnetic head, comprises inserting a first chip having wires and bonding contact pads through a winding window, bonding the first chip to the end surface of a slider, positioning a second chip having wires, bonding contact pads and a groove for the magnetic core, and bonding the contact pads together.

The scope of the invention is defined by the appended claims; and how it can be carried into effect is hereinafter particularly described with reference to the accompanying drawings, in which:-

FIG.1 is a perspective view showing an embodiment of magnetic head according to the present invention;

FIG.2 is a perspective view showing a conventional ferrite head and coil;

FIG.3(a) and 3(b) are perspective views of two parts of the head of Fig.1;

FIGS.4(a), 4(b) and 4(d) illustrate a method manufacturing the chip of Fig.3(a);

FIGS.5(a), 5(b), 5(c) and 5(d) illustrate a method for manufacturing the chip of Fig.3(b);

FIGS.6(a), 6(b), 6(c) and 6(d) illustrate another method for manufacturing the chip of Fig.3(b);

FIG.7 is a perspective view of another embodiment of head according to the present invention;

FIG.8 is a perspective view of two parts of the head of Fig.7;

FIG.9 is a perspective view of still another embodiment of head according to the present invention;

FIG.10 is a perspective view of yet another embodiment of head according to the present invention;

FIG.11 is a perspective view of a further embodiment of head according to the present invention; and

FIG.12 is a perspective view of a still further embodiment of head according to the present invention.

In an embodiment of the invention applied to a magnetic head having a ferrite slider 3 (Fig.1) to which a ferrite core 4 is bonded leaving a winding window 5 and a gap 9, a chip 1 is inserted through the window 5 and bonded to the trailing face of the slider 3. The chip 1 has several copper layers 10 laminated therein and connected separately to bonding contact pads (not shown) on its face opposite to the face bonded to the slider 3. A chip 2 also has several copper layers 10 laminated therein and connected separately to bonding contact pads (not shown). The chip 2 also has a groove 6 to accommodate the core 4, and the layers 10 are connected by separate conductive paths to tie bonding contact pads on either side of the groove 6. The layers 10 in the chip 1 are connected to their individual bonding contact pads by shorter conductive paths. The bonding contact pads on the faces of chips 1 and 2 are aligned and are brought into contact and melted to bond the chips together. Thus a coil around the ferrite core 4 is formed from the several copper layers 10 on both chips and conductive paths which penetrate the chips. The coil, made by using the thin film micro-fabrication technology, is hereinafter called a laminated coil.

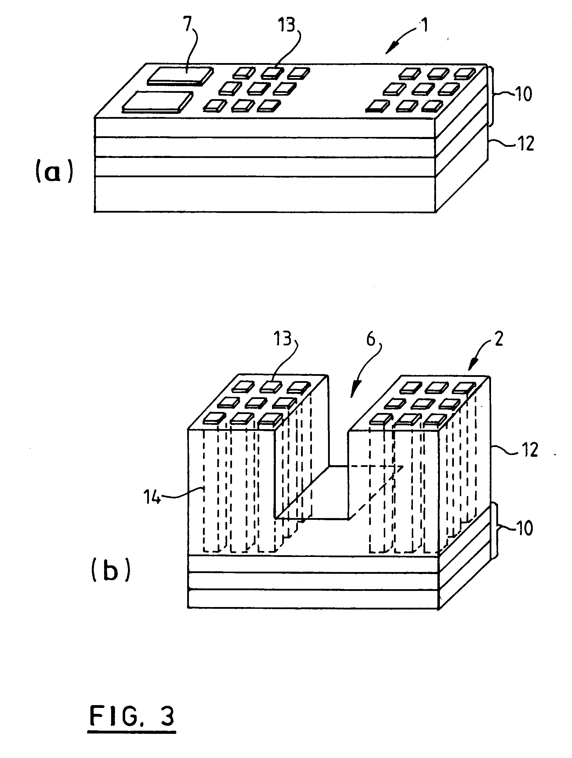

In the chip 1 (Fig.3(a)) the copper layers 10 and bonding contact pads 13 are formed on a Si substrate 12. The chip 2 (Fig.3(b)) has copper layers 10 and conductive paths 14 therefrom which extend through a Si substrate to the bonding contact pads 13. The groove 6 is formed between two groups of conductive paths 14. The bonding contact pads 13 are formed from low-melting solders and melt at about 150°C during heat treatment. The chip 1 is longer than the chip 2 and external electrical connections are made through bonding contact pads 7 in the exposed end of the chip 1 and current is supplied through wire-bonded leads 8 (Fig.1).

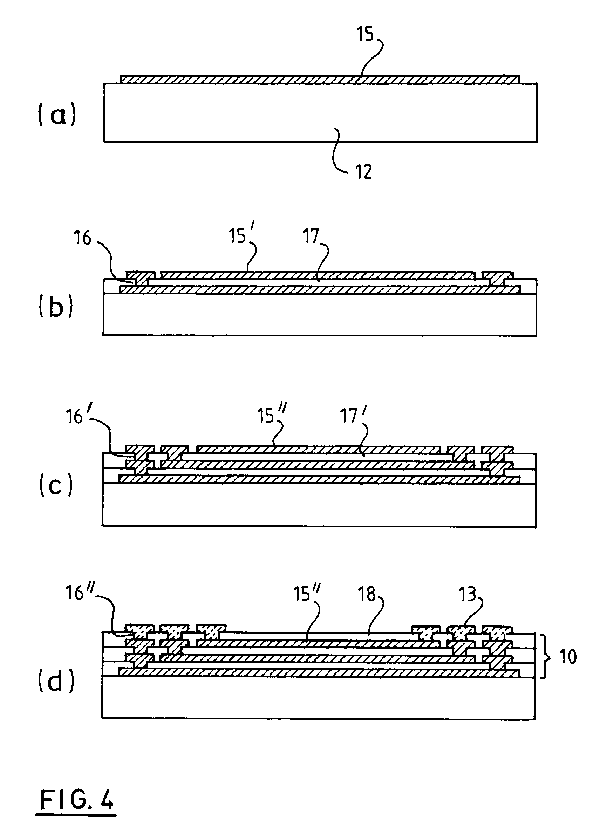

The chip 1 is made by plating copper wires 15 (Fig.4(a)) on the Si substrate 12. Then an inter-layer insulating film 17 (Fig.4(b)) with through holes 16 is formed by using a photoresist. Then a second layer of copper wires 15′ is formed by plating. A second inter-layer insulating film 17′ with (Fig.4(c)) through holes 16′ is laid down using photoresist techniques. A third layer of copper wires 15″ is formed by plating. Finally, a protective film 18 (Fig.4(d)) made of $AL_2O_3$ is formed, through holes 16″ are made though the protective film 18, and bonding contact pads 13 are formed by evaporation of low-melting solders in mask evaporation. When the copper wires are being plated, metal enters the through holes in the underlying insulating film and provides a conductive path to the copper wires below. Thus, a laminated set of multi-layered copper wires is formed. The size of the chip is approximately 0.3mm x 1.5mm and about 5000 chips can be obtained from a three-inch (76.2mm) wafer.

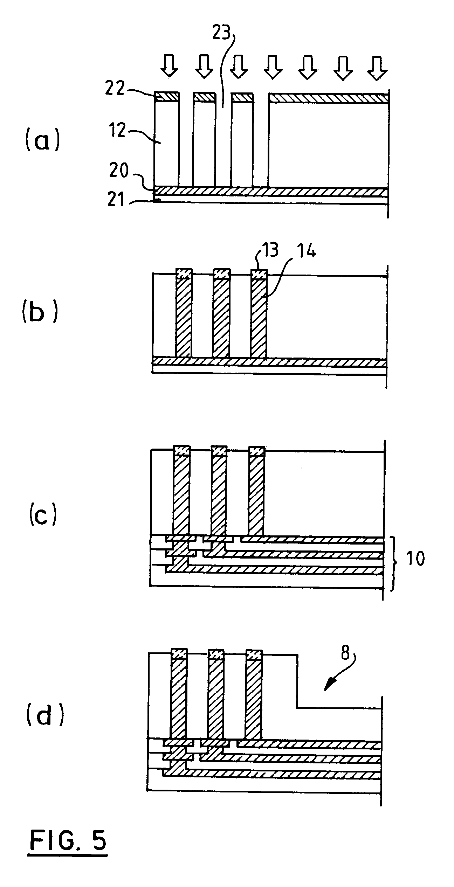

The chip 2 is made by forming on one surface of an Si substrate 12 (Fig. 5(a)) a metallic film (Ni) 20 and an insulating resin film 21 which can be a plating base. A mask film (Ni) 22, which can be a mask for etching, is coated on the other surface of the Si substrate 12. In the mask film 22, openings for holes to be made through the substrate 12 are formed by a usual photoetching (chemical etching) method and reactive ion etching is applied to Si. The gas used for etching is $CHF_3$ which erodes the Ni film very little. Holes 23 through the substrate are thus made to extend to film 20. The metallic film 20 (Fig.5(b)) is used as a plating base and Ni plating is applied to form conductive paths 14 through the holes 23 in the Si substrate. Low-melting solders are evaporated by mask evaporation to form bonding contact pads 13. On the opposite side to the bonding contact pads, multiple layers of wires 10 (Fig.5(c)) are formed in the same manner as in manufacturing the chip 1. Finally, on the face with the bonding contact pads, the groove 6 (Fig.5(d)) is formed by mechanical processing.

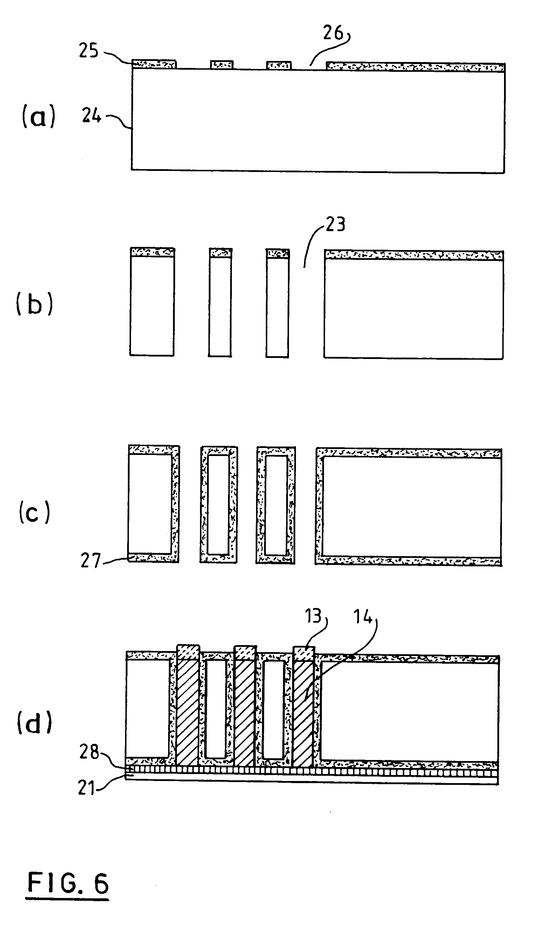

In another method of forming conductive paths in the chip 2, a Si substrate 24 (Fig.6(a)) used is one with (110) plane. On the surface of the substrate, a $SiO_2$ film 25 of 200nm thickness is formed. Then openings 26 in the film 25 for holes which penetrate to the substrate 24 are formed by usual photoetching. Then the $SiO_2$ film is masked and etching using a 40% KOH solution at 40°C is applied to the Si substrate. In this case, (111) plane is taken on the side surfaces of holes and holes 23 (Fig.6(b)) which penetrate the substrate 24, are formed with no side etching. Then the surface of the Si, substrate is oxidized by a thermal oxidation method to form a $SiO_2$ film 27 (Fig.6(c)) of 100nm thickness. After the above processing, a metallic leaf 28 (Fig.6(d)) and an insulating film 21 are formed on the bottom surface of the Si substrate. Then the metallic leaf 28 is used as a plating base and Cu plating is applied to form conductive paths 14 which penetrate the Si substrate. Then low-melting solders are evaporated by mask evaporation to form the bonding contact pads 13. Processes following the formation of the bonding contact pads are similar to those described above in relation to Fig.5. In this embodiment, the metallic leaf is used as a plating base. However, it will be recognized that a metallic film coated by evaporation or sputtering can be used as the plating base.

As described, the holes made in the Si substrate are filled up by plating. It will be appreciated that they can be filled up by capillary action. That is, the Si substrate with the holes which penetrate it, is submerged in melted solder to fill up the holes. Substrates of silicon are used because of the evenness of the surface of the substrate and workableness in etching. However, it will be appreciated that a resin substrate may be used, if these conditions are satisfied. Thus, an epoxy resin substrate may be used instead of the Si substrate and etched by reactive ion etching using an oxygen gas. As the types of selective removal of unwanted material exceed 100 between the epoxy resins and the Ni film used as a masked material in etching, holes which penetrate the resins substrate can be easily formed.

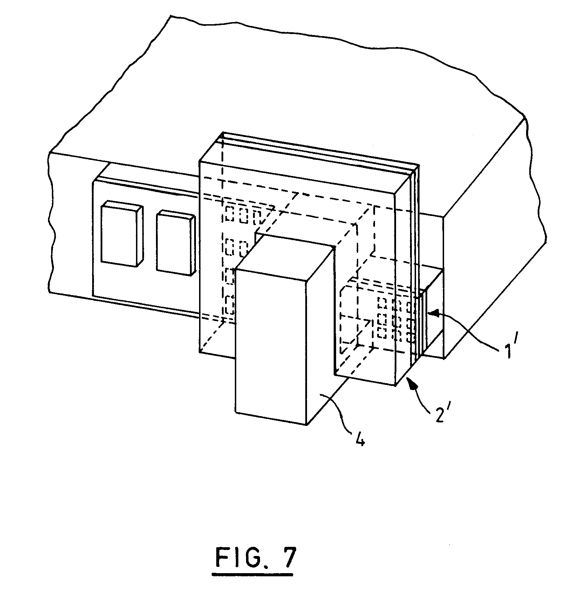

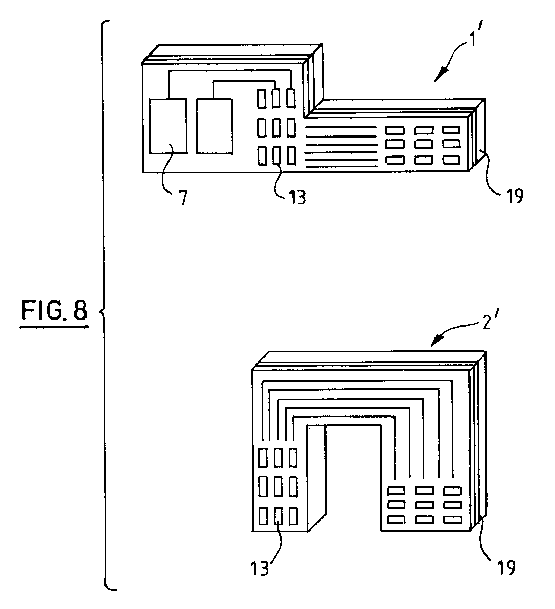

In another embodiment according to the present invention, conductive paths surrounding the ferrite core 4 (Fig.7) are formed from chips 1' and 2' with layered copper wires. The chip 2' does not need conductive paths similar to the paths 14 which penetrate the substrate. Each of the chips 1' and 2' (Fig.8) is made of a substrate 19. The chip 1' has a wide portion including bonding contact pads 7 for the leads 8 and bonding contact pads 13, and a narrow portion with bonding contact pads 13. The chip 1' is disposed so that its back faces the slider and the narrow portion is inserted into the winding window. Then the back of the chip 1' is bonded to the end surface of the slider. The chip 2' is U-shaped and is disposed so that it faces the chip 1' and the bonding contact pads 13 of both chips are aligned. After alignment, the bonding contact pads of both chips are melted by heat treatment at 150°C. The layered wires are thus bonded and a coil is formed around the magnetic core. Both chips with insulating film and copper wires alternating on the substrate 19 are formed in the same manner is the chip 1 in Fig.4. A magnetic gap is provided between the ferrite core and the slider, which are disposed in Fig.7 upside down in relation to Fig.1.

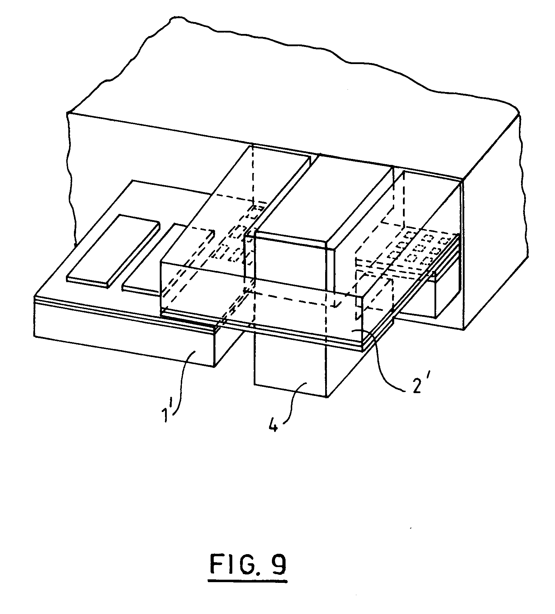

In a further embodiment of the present invention, chips 1' and 2' (Fig.9) similar to those of Figs. 7 and 8, are turned through 90° in relation to slider. The chip surfaces on which the wires are formed are normal to the end surface of the slider. first, the narrow portion of chip 1' is inserted through the winding window and the side surface of the chip is bonded to the end surface of the slider. Then the chip 2' is disposed so that it faces the chip 1' and the bonding contact pads of both chips are aligned. After alignment, the bonding contact pads are melted by heat treatment at 150°C. Then the side surface of the chip 2' is bonded to the end surface of the slider, thus joints between the chip and the slider become firm. A magnetic gap is provided between the ferrite core and the slider, and may be either way up in relation to Fig.1.

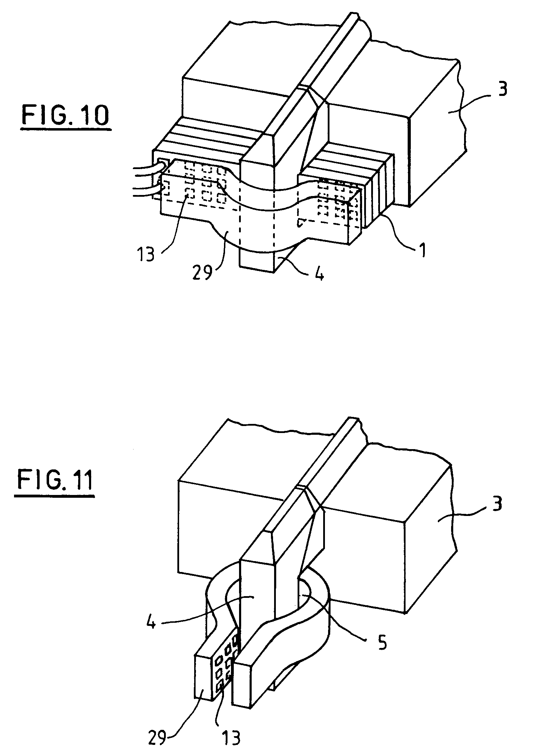

In yet another embodiment of the present invention, a flexible substrate 29 (Fig.10) is used with a chip 1 to form the coil surrounding the ferrite core 4. Copper wires and bonding contact pads are formed on the flexible substrate 29. The chip 1 with the layered copper wires formed on the Si substrate is inserted in the winding window and bonded to the end surface of the slider. Then the flexible substrate 29 is disposed so that its contact pads face the contact pads of the chip 1. The bonding contact pads contact with each other, are melted and bonded.

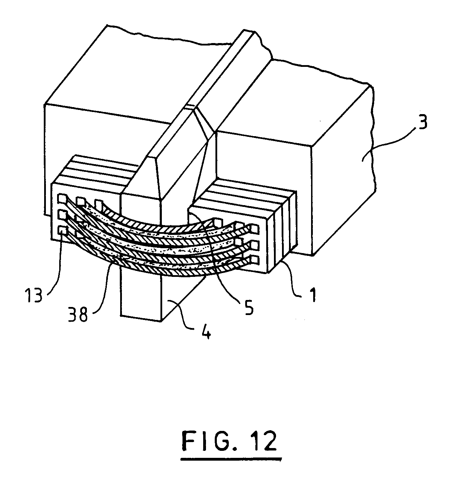

In a yet further embodiment of the present invention, the coil is formed on a single flexible substrate 29 (Fig.11). Such a flexible substrate is inserted through the winding window 5 and encircles the ferrite core 4. Then bonding contact pads 13 at both ends of the flexible substrate contact each other are melted and bonded, whereby the coil is formed.

In a still further embodiment of the present invention, conductive paths surrounding the ferrite core 4 are formed by the use of a chip 1 and wires 28 (Fig.12). The Si chip 1 with layered copper wires, is inserted through the winding window 5 and bonded to the end surface of the slider 3. Then wires 38 are applied to the bonding contact pads 13 which are heated to bond with the wires 28 at both ends of the substrate so as to be connected with each other.

The magnetic head to which the laminated coil is applied, may be called a monolithic-type head in which the slider itself is made of ferrite as described. Another type of head for a hard disk is a composite-type in which a magnetic core is implanted in a nonmagnetic slider. Also in the composite-type head, the shapes of the winding window and the magnetic core are like those of the monolithic type and the present invention can be applied also to the composite type head.

It will be understood that several wires are formed on each conductive layer, and that the bonding contact pads are so disposed as to provide a single path with multiple turns around the core, formed of the wires.

The laminated coil formed as described hereinbefore can be of significantly smaller size than a conventional coil of wound copper wire. The size of the ferrite core and the winding window can become significantly smaller, for example, decreasing to one-half or less of that of a conventional core and winding window. Thus, high-frequency characteristic and head efficiency are improved. Further, as the laminated coil is directly bonded to the slider and not heavy, a heavy load is not applied to the ferrite core and a construction resistant to external shock can be implemented. Further, as the laminated coil is formed by simple bonding, the cost in coil winding is eliminated and costs can be significantly reduced.

## Claims

1. A magnetic head including a magnetic core (4) and a slider (3), comprising a substrate (1;1';29) having wires (10) embedded therein and connected to surface bonding contact pads (13) connected to each other to form a coil through a winding window (5) between the core and slider.

2. A head according to claim 1, wherein the substrate is in the form of a chip (1;1') disposed through the winding window (5) and the bonding contact pads (13) thereon are connected through bonding contact pads (13) on the surface of a second chip (2;2') having wires (10) embedded therein and connected to the contact pads (13), the bonding contact pads (13) on both chips (1,2;1',2') being bonded to each other to form the coil.

3. A head according to claim 1, wherein the substrate is in the form of a chip (1) disposed through the winding window (5) and the bonding contact pads (13) thereon are connected through bonding contact pads (13) on the surface of a flexible substrate (29) having wires (10) embedded therein and connected to contact pads (13), the bonding contact pads on both chip (1) and substrate (29) being bonded to each other to form the coil.

4. A head according to claim 1, wherein the substrate (29) is flexible and the bonding contact pads (13) at each end of the substrate are bonded together to form the coil.

5. A head according to claim 1, wherein the substrate is in the form of a chip (1) disposed through the winding window (5) and the bonding contact pads (13) thereon are connected by wires (38) external to the core (4).

6. A head according to claim 2, wherein the chip (1;1') is bonded to the slider (3).

7. A head according to claim 6, wherein the second chip (2') is also bonded to the slider (3).

8. A head according to any preceding claim, wherein the wires (10) are formed as thin film wiring within the substrate.

9. A method of manufacturing a head according to claim 2, comprising inserting a first chip (1) having wires (10) and bonding contact pads (13) through a winding window (5), bonding the first chip to the end surface of a slider (3), positioning a second chip (2) having wires (10), bonding contact pads (13) and a groove (6) for the magnetic core (4), and bonding the contact pads (13) together.

10. A method according to claim 9, comprising the steps of forming holes (23) through a monocrystalline silicon substrate (12) of the second chip (2) by reactive ion etching, and filling the holes with conductive material (14) by plating.

11. A method according to claim 9, comprising the steps of forming holes (23) through a resin substrate (24) of the second chip (2) by reactive ion etching using an oxidising gas, and filling the holes with conductive material (14) by plating.

12. A method according to claim 9, comprising the steps of forming holes (23) through a monocrystalline silicon substrate with (110) plane of the second chip by etching using a solution of KOH, or ethylenediamine, or a hydrazine, or a mixture thereof, forming a silicon oxide film on a surface of the silicon by thermal oxidation, and filling the holes (23) with conductive material by plating.

FIG. 1

FIG. 2

## FIG. 3

FIG.4

## FIG. 5

(a) 25  26  24

(b) 23

(c) 27

(d) 13  14  28  21

# FIG. 6

FIG. 7

FIG. 8

FIG. 9

FIG.10

FIG.11

**FIG. 12**